# EUROPEAN PATENT SPECIFICATION

(11) **EP 1 384 607 B1**
(45) Date of publication and mention of the grant of the patent: **09.11.2005**
(21) Application number: 03016416.4
(22) Date of filing: 21.07.2003
(51) Int. Cl.: B60H 1/00

(54) **A system for controlling the climate in the passenger compartment of a motor vehicle**
Klimaregelungssystem für die Fahrgastzelle eines Kraftfahrzeuges
Système de contrôle de climatisation pour l'habitacle d'un véhicule à moteur

(30) Priority: 24.07.2002 IT TO20020652
(43) Date of publication of application: 28.01.2004
(73) Proprietor: C.R.F. Società Consortile per Azioni, 10043 Orbassano (Torino) (IT)
(72) Inventor: Malvicino, Carloandrea, 10146 Torino (IT); Mola, Stefano, 10045 Piossasco (Torino) (IT); Rovera, Giuseppe, 10135 Torino (IT)
(74) Representative: Quinterno, Giuseppe

(56) References cited:
- DE-A- 4 113 374
- DE-A- 4 127 690
- US-A- 5 291 748

## Description

The present invention relates to a system for controlling the climate in the passenger compartment of a motor vehicle.

More specifically, the subject of the invention is a climate-control system of the kind defined in the preamble of claim 1.

Climate-control systems of this type, as disclosed for instance in DE 41 13 374-A, are used very widely.

A problem which arises with these systems is due to the fact that users do not generally have a precise reference point with regard to the temperature that is associated with a thermally comfortable condition. They are, however, very well able to perceive a change from a sensation of heat or coldness to one of comfort.

Currently, climate-control systems for the passenger compartments of motor vehicles are in fact complex and users often have difficulty in using them. In an attempt to find the correct setting of the system to ensure the desired thermal/climatic comfort, the user is often led to interact excessively with the control devices of the system. The user may thus become irritated whilst driving and may possibly be distracted, without succeeding in quickly finding a suitable comfort condition.

This is due to a large extent to the fact that climate-control systems inevitably have appreciable inertia so that the desired effect of an adjustment that has been set is achieved with a considerable delay after the time of setting.

The object of the present invention is to propose a system for controlling the climate in the passenger compartment of a motor vehicle which overcomes these disadvantages.

According to the invention, this object is achieved by a control system having the features defined in claim 1.

The rapid thermal feedback device produces an almost immediate localized sensation of the effect which will subsequently be produced by the adjustment set by the user.

Further characteristics and advantages of the invention will become clear from the detailed description which is given purely by way of non-limiting example with reference to the appended drawings, in which:
Figure 1 is a schematic representation of a system for controlling the climate in the passenger compartment of a motor vehicle according to the present invention,
Figure 2 is a perspective view which shows an embodiment of an air-diffuser device included in a system according to the present invention.

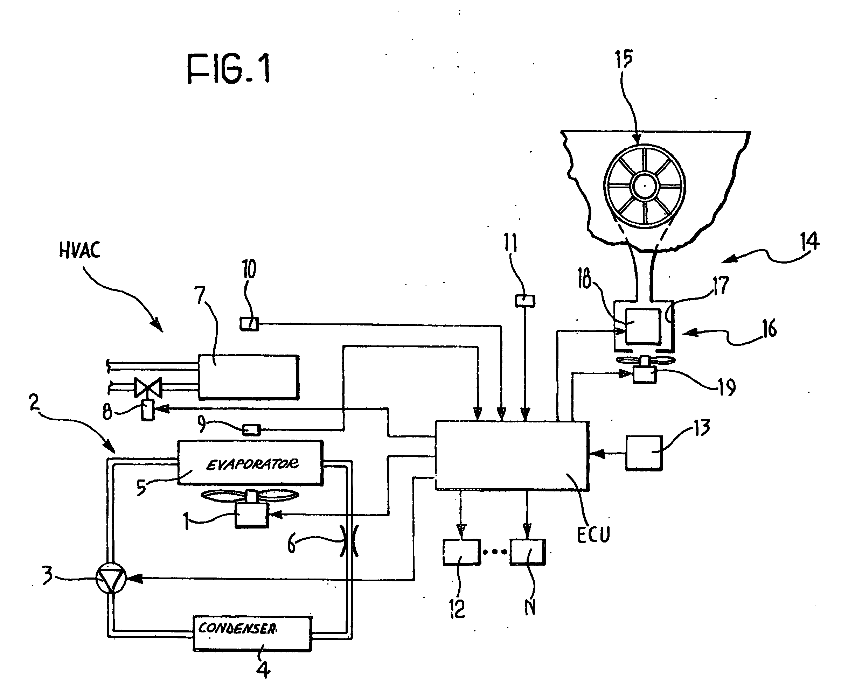

With reference to Figure 1, a system for controlling the climate in the passenger compartment of a motor vehicle according to the present invention comprises a heating, ventilation and air-conditioning unit HVAC including an electric fan 1 which can draw in air from outside and/or from inside the passenger compartment of the motor vehicle and can force this air through the unit. The unit also comprises a refrigeration circuit, generally indicated 2 and comprising, in known manner, a motor-driven compressor 3 downstream of which there is a condenser 4 the output of which is connected to the input of an evaporator 5 via an expansion device 6. The output of the evaporator 5 is connected to the input of the motor-driven compressor 3.

The unit HVAC further comprises a heater 7, typically constituted by a liquid/air heat-exchanger through which a flow of the engine-cooling liquid of the motor vehicle is intended to flow. The flow of this cooling liquid can be controlled by means of a solenoid valve 8.

The control system also comprises an electronic control unit ECU which is connected to the electric fan 1, to the motor-driven compressor 3, to the solenoid valve 8, and to yet further devices.

In the example shown in Figure 1, the control unit ECU is also connected to temperature sensors 9, 10 and 11 which are disposed downstream of the evaporator 5, downstream of the heater 7, and in the passenger compartment of the motor vehicle, respectively.

The unit ECU is also arranged to control in known manner devices for shutting-off/deflecting air-flows in the unit HVAC, such as motorized shutter devices or the like, indicated 12 ...N in Figure 1.

A control device 13 that can be used by a user in order to set a desired temperature of the air in at least one region or zone of the passenger compartment is also connected to the electronic control unit ECU. This device may be of the manually-operable type, such as a rotatable knob, a pushbutton, or a series of push-buttons, etc. Alternatively, the device 13 may be a device suitable for picking up and decoding suitable voice commands issued by the user.

The climate-control system further comprises a rapid thermal feedback device, generally indicated 14 in Figure 1. In the embodiment shown by way of example therein, the rapid thermal feedback device 14 comprises an air diffuser 15 located in a position that can be reached easily by the user in use, preferably with one hand. The diffuser may be arranged, for example, on the dashboard.

The diffuser 15 of the rapid thermal feedback device is intended to emit a localized flow of treated air coming from an air-treatment device 16 connected thereto.

In the embodiment shown by way of example, the air-treatment device 16 is separate and distinct from the air-conditioning unit HVAC and comprises a duct 17 in which there is a thermoelectric element such as a Peltier-effect cell 18 for rapidly cooling/heating an air-flow directed towards the diffuser 15, for example, by means of a small electric fan 19.

The thermoelectric element and the electric fan 19 are advantageously controlled by the same unit ECU which controls the operation of the unit HVAC. The unit ECU is advantageously arranged to control the fan 19 and the thermoelectric element 18 in a manner such as to modify the thermal characteristics of the localized air-flow emitted by the diffuser 15 as a result of and consistently with the setting set by the user by means of the control device 13, but markedly more quickly than the corresponding change in the thermal characteristics of the air in the passenger compartment of the motor vehicle.

In the embodiment shown in Figure 1, the diffuser 15 is shown as separate from and independent of the control device 13.

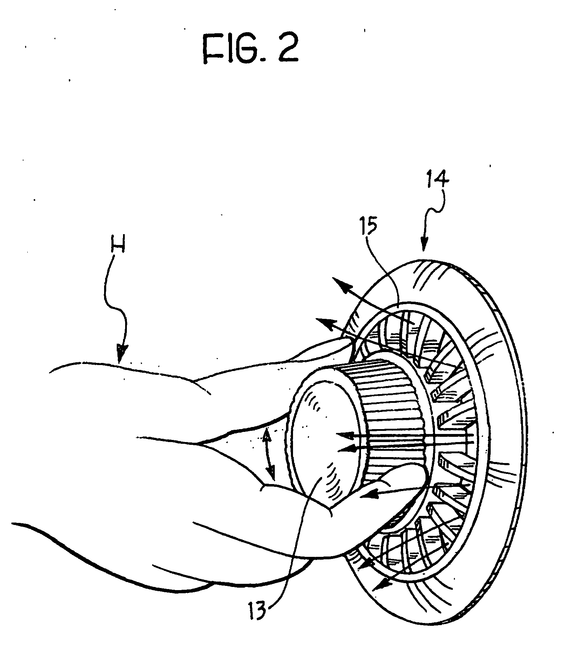

In the embodiment shown in Figure 2, the control device 13 can be operated manually and is constituted by a rotatable knob and the diffuser 15 is arranged around the knob so that, in use, the localized air-flow emitted by the diffuser 15 can pass over the user's hand H whilst he is operating the knob.

In general, for a manually-operable control or adjustment member, the diffuser 15 of the rapid thermal feedback device 14 is advantageously disposed adjacent the control or adjustment member. The diffuser 15 may be formed, for example, as a duct which has an outlet opening closed by a permeable element and may have very widely variable geometrical characteristics.

As an alternative to the embodiment shown in Figure 1, the air-treatment device associated with the rapid thermal feedback device may be at least partly constituted by devices shared with the unit HVAC. The arrangement must, however, be such as to ensure an extremely rapid response in terms of the thermal characteristics of the localized air-flow emitted from the output diffuser of the rapid thermal feedback device.

In other embodiments, not shown, the air-treatment device associated with the rapid thermal feedback device may comprise devices other than the above-mentioned Peltier-effect thermoelectric element, provided that they are suitable for ensuring a rapid change in the thermal characteristics of the localized air-flow emitted from the associated diffuser.

Naturally, the principle of the invention remaining the same, the forms of embodiment and details of construction may be varied widely with respect to those described and illustrated purely by way of non-limiting example, without thereby departing from the scope of the invention as defined in the appended claims.

## Claims

1. A system for controlling the climate in the passenger compartment of a motor vehicle, comprising:
control means (13) which can be used by a user in order to set a desired temperature of the air in at least one region or zone of the passenger compartment, and
air-conditioning means (HVAC) suitable for bringing about a change in the temperature of the air at least in the said region or zone of the passenger compartment to bring the temperature to the value set by the user by means of the control means (13),
the system comprising a rapid thermal feedback device (14) comprising an air diffuser (15) which is intended to be arranged in a position that can be reached by the user in use, which can emit a localized flow of treated air, and which is connected to air-treatment means (16) suitable for modifying the thermal characteristics of the localized air-flow as a result of and consistently with the setting set by the user by means of the control means (13), but more quickly than the corresponding change in the thermal characteristics of the air in the said region or zone of the passenger compartment;
the system being **characterised in that** the control means (13) comprise a manually-operable adjustment member (13), and the diffuser (15) is arranged immediately adjacent to the adjustment member (13) and in a manner such that, in use, the localized air-flow emitted by the diffusers (15) must pass over the driver's hand (H) which is operating the adjustment member (13).

2. A system according to Claim 1 in which the air-treatment means (16) associated with the rapid thermal feedback device (14) are at least partly shared with the air-conditioning means (HVAC).

3. A system according to Claim 1 in which the air-treatment means (16) associated with the rapid thermal feedback device (14) are separate and distinct from the air-conditioning means (HVAC).

4. A system according to Claim 3 in which the air-treatment means (16) comprise a thermoelectric element (18) such as a Peltier-effect cell.

5. A system according to Claim 1 in which the adjustment member is a rotary knob (13) and the diffuser (15) is arranged around it.

## Patentansprüche

1. System für die Regelung des Klimas im Fahrgastraum eines Kraftfahrzeugs, wobei das System enthält:
eine Regelvorrichtung (13), die von einem Benützer dazu verwendet werden kann, um eine gewünschte Temperatur der Luft in zumindest einem Bereich oder Gebiet des Fahrgastraums einzustellen, und
eine Klimaeinrichtung (HVAC), die dazu geeignet ist, eine Änderung in der Temperatur der Luft zumindest in dem Bereich oder Gebiet des Fahrgastraums hervorzurufen, um die Temperatur auf jenen Wert zu bringen, den der Benützer mit der Regelvorrichtung (13) eingestellt hat,
wobei das System eine schnelle Wärmerückkopplungs-Einrichtung (14) enthält, die einen Luftdiffusor (15) enthält, der so vorgesehen ist, dass er an einer Stelle angeordnet ist, die vom Benützer im Betrieb leicht erreicht werden kann, dass er eine örtlich begrenzte Strömung von behandelter Luft abgeben kann, und dass er mit einer Luft-Behandlungseinrichtung (16) verbunden ist, die geeignet ist, die thermischen Eigenschaften der örtlich begrenzten Luftströmung als Ergebnis und im Einklang mit jener Einstellung zu verändern, die der Benützer mit der Regelvorrichtung (13) eingestellt hat, jedoch viel schneller als die entsprechende Änderung in den thermischen Eigenschaften der Luft im Bereich oder Gebiet des Fahrgastraums;
wobei das System **dadurch gekennzeichnet ist, dass** die Regelvorrichtung (13) ein mit der Hand zu betätigendes Einstellelement (13) enthält, und der Diffusor (15) unmittelbar neben dem Einstellelement (13) und so angeordnet ist, dass die örtlich begrenzte Luftströmung, die der Diffusor (15) abgibt, im Betrieb über die Hand (H) des Lenkers streicht, die das Einstellelement (13) betätigt.

2. System gemäß Anspruch 1, wobei die Luft-Behandlungseinrichtung (16), die der schnellen Wärmerückkopplungs-Einrichtung (14) zugeordnet ist, zumindest teilweise ein Teil der Klimaeinrichtung (HVAC) ist.

3. System gemäß Anspruch 1, wobei die Luft-Behandlungseinrichtung (16), die der schnellen Wärmerückkopplungs-Einrichtung (14) zugeordnet ist, von der Klimaeinrichtung (HVAC) getrennt und abgesondert ist.

4. System gemäß Anspruch 3, wobei die Luft-Behandlungseinrichtung (16) ein thermoelektrisches Element (18) enthält, beispielsweise eine Peltiereffekt-Zelle.

5. System gemäß Anspruch 1, wobei das Einstellelement ein Drehknopf (13) ist und der Diffusor (15) um diesen herum angeordnet ist.

## Revendications

1. Système de contrôle de climatisation pour l'habitacle d'un véhicule à moteur, comprenant :
des moyens de commande (13) qui peuvent être utilisés par un utilisateur afin de régler une température souhaitée de l'air dans au moins une région ou zone de l'habitacle, et
des moyens de climatisation (CVCA) adaptés pour apporter un changement dans la température de l'air au moins dans ladite région ou zone de l'habitacle pour amener la température à la valeur définie par l'utilisateur au moyen des moyens de commande (13),
le système comprenant un dispositif de retour thermique rapide (14) comprenant un diffuseur d'air (15) qui est destiné à être agencé dans une position qui peut être atteinte par l'utilisateur lors de l'utilisation, qui peut émettre un flux localisé d'air traité, et qui est connecté à des moyens de traitement d'air (16) adaptés pour modifier les caractéristiques thermiques du flux d'air localisé à la suite du et de manière correspondante au réglage défini par l'utilisateur au moyen des moyens de commande (13), mais plus rapidement que le changement correspondant des caractéristiques thermiques de l'air dans ladite région ou zone de l'habitacle ;
le système étant **caractérisé en ce que** les moyens de commande (13) comprennent un élément d'ajustement pouvant être actionné manuellement (13), et le diffuseur (15) est agencé immédiatement à côté de l'élément d'ajustement (13) et de telle sorte que, lors de l'utilisation, le flux d'air localisé émis par le diffuseur (15) doit passer au-dessus de la main du conducteur (H) qui actionne l'élément d'ajustement (13).

2. Système selon la revendication 1, dans lequel les moyens de traitement d'air (16) associés au dispositif de retour thermique rapide (14) sont au moins en partie partagés avec les moyens de climatisation (CVCA).

3. Système selon la revendication 1, dans lequel les moyens de traitement d'air (16) associés au dispositif de retour thermique rapide (14) sont séparés et distincts des moyens de climatisation (CVCA).

4. Système selon la revendication 3, dans lequel les moyens de traitement d'air (16) comprennent un élément thermoélectrique (18) tel qu'une cellule à effet Peltier.

5. Système selon la revendication 1, dans lequel l'élément d'ajustement est une molette rotative (13) et le diffuseur (15) est agencé autour de cette dernière.
